# EUROPEAN PATENT APPLICATION

(11) **EP 4 503 211 A1**
(43) Date of publication of application: **05.02.2025**
(21) Application number: 23461634.0
(22) Date of filing: 31.07.2023
(51) Int. Cl.: H01M 8/04089, B60L 58/31, H01M 8/04082, H01M 8/04225, H01M 8/04302

(54) **FUEL CELL START-UP ARCHITECTURE**

(71) Applicant: Hamilton Sundstrand Corporation, Charlotte, NC 28217 (US)
(72) Inventor: KRUCZEK, Grzegorz, 51-317 Wroclaw (PL)
(74) Representative: Dehns

(57) **Abstract**

A start-up architecture for a fuel cell comprising: a fuel cell (10) having a hydrogen input (12) and an oxygen source input (14) and a hydrogen output (15) for outputting residual hydrogen not used in the fuel cell reaction, the hydrogen output connected to the hydrogen input via a mixer (60) in a hydrogen loop (102); a bypass loop (103), bypassing the mixer, between the hydrogen output and the hydrogen input; a control valve (CV1) in the bypass loop between the hydrogen output and the hydrogen input; a hydrogen start-up stored energy source (20, 20', 200") connected to the hydrogen input via a hydrogen start-up line; and an oxygen source start-up stored energy source (40, 200, 200") connected to the oxygen source input via an oxygen source start-up line, wherein, during a fuel cell start up process, the architecture is configured to provide hydrogen to the hydrogen input from the hydrogen start-up stored energy source, via the hydrogen start-up line, and to provide a source of oxygen to the oxygen source input from the oxygen source start-up stored energy source via the oxygen source start-up line, and wherein when start-up is completed, the oxygen source start-up line and the hydrogen start-up line are configured to close.

## Description

### TECHNICAL FIELD

The present disclosure is concerned with providing a start-up architecture for a fuel cell, e.g. for an aircraft fuel cell.

### BACKGROUND

There is increasing pressure on the aerospace industry to switch the primary fuel for aircraft from hydrocarbons to more sustainable energy sources such as hydrogen. Hybrid fuel cell gas turbine systems, for example, include a gas turbine system and also use electric power generated by a fuel cell. Such systems comprise low-temperature fuel cells (e.g. proton exchange membrane fuel cells (PEMFCs)) that can increase fuel-to-electricity conversion efficiency and lower emissions of greenhouse gases. Hybrid fuel cell gas turbine systems use compressed gas/air to drive a turbine to drive an aircraft propeller and also use electric power that is generated by a hydrogen fuel cell. Improvements have been made possible in relation to the use of compact and efficient fuel cells by the ability to store sufficient hydrogen in a compressed and/or liquid form. The hydrogen required to generate electricity from the fuel cell is typically stored in a tank. This is made feasible by technologies that enable hydrogen to be cryogenically compressed for storage or to be stored in liquid form. The compression of hydrogen for storage requires the hydrogen to be very highly compressed (e.g. between 300 - 850 bar and less than 78K) or to be cryogenically cooled to liquid state at temperatures below 20K. Such low temperatures, however, are typically only needed to allow efficient storage of the hydrogen. The hydrogen then needs to be heated, in the system, for use by the fuel cell. Fuel cells require an additional start-up procedure to provide air and hydrogen to the fuel cell to generate energy. Once the fuel cell is operating, it generates enough energy to start loads to be powered by the fuel cell e.g. the main engines of an aircraft. The fuel cell may also generate electricity for the aircraft and may also act as an auxiliary power unit (APU). Typically, a fuel cell APU on an aircraft is started up on the ground and then operates throughout the whole flight.

Known start-up procedures create a time delay in operating the fuel cell, are performed during ground operation and/or require external energy to start, combustion or complex, large and/or heavy components. There is a desire for an improved fuel cell start-up architecture.

### SUMMARY

Accordingly, there is provided a start-up architecture for a fuel cell that makes use of stored energy sources to start up the fuel cell operation.

Specifically, there is provided a start-up architecture for a fuel cell comprising: a fuel cell having a hydrogen input and an oxygen source input and a hydrogen output for outputting residual hydrogen not used in the fuel cell reaction, the hydrogen output connected to the hydrogen input via a mixer in a hydrogen loop; a bypass loop, bypassing the mixer, between the hydrogen output and the hydrogen input; a control valve in the bypass loop between the hydrogen output and the hydrogen input; a hydrogen start-up stored energy source connected to the hydrogen input via a hydrogen start-up line; and an oxygen source start-up stored energy source connected to the oxygen source input via an oxygen source start-up line, wherein, during a fuel cell start up process, the architecture is configured to provide hydrogen to the hydrogen input from the hydrogen start-up stored energy source, via the hydrogen start-up line, and to provide a source of oxygen to the oxygen source input from the oxygen source start-up stored energy source via the oxygen source start-up line, and wherein when start-up is completed, the oxygen source start-up line and the hydrogen start-up line are configured to close.

A recharge circuit may also be provided to recharge the start-up energy sources after start-up is completed.

### BRIEF DESCRIPTION

Examples of a fuel cell start-up architecture will be described by way of example only, with reference to the drawings. It should be noted that these are examples only, and variations are possible within the scope of the claims.
Figure 1 is a schematic of an example fuel cell start-up architecture according to this disclosure.
Figure 2 is a schematic of another example fuel cell start-up architecture according to this disclosure.
Figure 3 is a schematic of another example fuel cell start-up architecture according to this disclosure.

### DETAILED DESCRIPTION

A hydrogen fuel cell arrangement is already known for use in aircraft and the like and will not be described in detail here. In short, the fuel cell 10 receives hydrogen from a hydrogen storage tank. The hydrogen in the tank is compressed or stored at an extremely low temperature and so needs to be appropriately conditioned before it can be used in the fuel cell 10. Where the hydrogen is cooled in the storage tank, it is then warmed in a heat exchanger where it undergoes heat exchange with air from the air loop, before it is provided as a hydrogen input 12 to the fuel cell 10, as fuel cells require the hydrogen to be at greater than 0°C, preferably between 5°C and 95°C. Air or some other source of oxygen is provided in an air loop to an oxygen input 14 of the fuel cell, and the oxygen and hydrogen undergo a chemical reaction to generate electricity to power aircraft systems.

For the fuel cell 10 to operate, hydrogen and air must both be flowing through the fuel cell. As mentioned above, a procedure is required to manage the start-up phase of the system before there is a stable flow of hydrogen and air through the fuel cell.

The invention provides a start-up architecture to ensure the flow of both hydrogen and air to the fuel cell in a rapid and simple manner utilizing energy stored in high pressure tanks and/or batteries to initiate the flows.

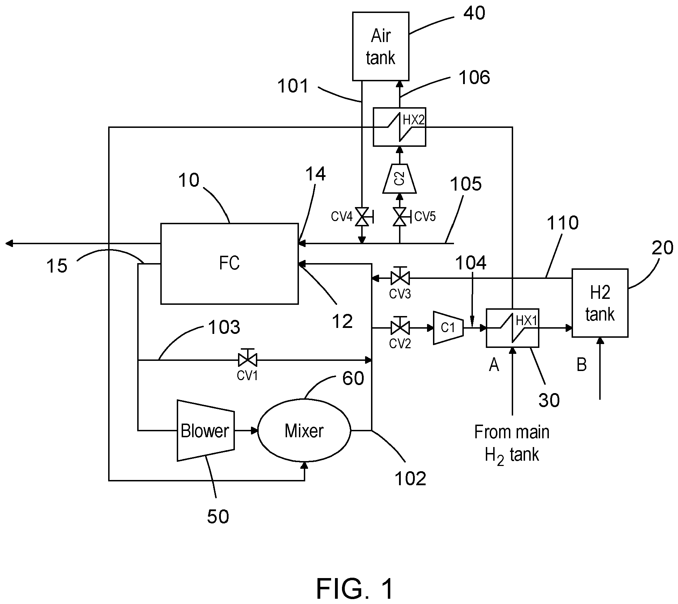

In a first example, as shown in Fig. 1, the start-up procedure utilises energy stored in high pressure air and hydrogen tanks. The arrangement includes a start-up hydrogen tank 20 storing pressurised hydrogen, and a high pressure start-up air tank 40 storing pressurised air. The air tank 40 is connected to the oxygen input 14 of the fuel cell via a start-up air line 101. The hydrogen tank 20 is connected to the hydrogen input 12 via a start-up hydrogen line 110 and hydrogen loop 102. Air (in an amount determined necessary for operation of the fuel cell) is first released from the air tank 40 via a first control valve CV4 in the air line 101 between the air tank and the fuel cell air inlet 14 and is fed to the fuel cell 10 via the air inlet 14. The amount of air required by the fuel cell may be controlled by a controller to ensure a smooth ramp up of power.

The flow of hydrogen into the hydrogen loop 102 is started using the high pressure hydrogen tank 20. Hydrogen is released from the tank 20 via a control valve CV3 to the hydrogen inlet 12 of the fuel cell 10.

The hydrogen loop 102 includes a bypass loop 103. In normal operation of the fuel cell, hydrogen that exits the fuel cell at hydrogen output 15 (since the chemical reaction does not use all of the hydrogen provided to the fuel cell - usually a maximum of 95% is consumed in the energy generation) is recirculated to the fuel cell input 12 via the hydrogen loop 102. In the start-up phase, however, before the blower in the hydrogen loop 102 ramps up to the required operation point, a control valve CV1 in the bypass loop is opened during start-up to provide a short cut for the hydrogen. The hydrogen is forced through this loop due only to the pressure from the start-up hydrogen tank.. The blower 50 and mixer 60 are not, at this stage, operable as they are not receiving power from the fuel cell, and so this diversion of the hydrogen allows for lower pressure losses and smooth operation at the beginning of fuel cell operation.

Once the hydrogen and air provided to the fuel cell in this start-up operation generate sufficient electrical energy to operate the blower 50, the control valve CV1 in the bypass loop is closed, to close the bypass loop between the hydrogen output 15 and the hydrogen input 14. Also, at this time, the control valve CV3 between the hydrogen tank and the fuel cell 10 is also closed, thus closing the direct feeding of hydrogen from the tank to the fuel cell. The operation of these control valves CV1 and CV3 is based on measurements of mass flow, temperature and pressure in the recirculation loop. For safe operation, the temperature of the hydrogen provided to the fuel cell must exceed 0° (and preferably be in the range of 5°C to 95°C) and so the controller will control the opening of the control valves CV1 and CV3 to ensure stable temperature, pressure and mass flow in the recirculation loop while the blower and mixer, and other loads powered by the fuel cell, e.g. the main engines, are starting up.

Once start-up is completed, the normal fuel cell air and hydrogen loops operate to run the fuel cell.

It is then possible to restore the pressure in the start-up air tank and the start-up hydrogen tank, so that they are available for the next start-up.

The hydrogen tank pressure can be restored via the hydrogen loop 102. In this phase, hydrogen from the loop 102 is provided back to the hydrogen tank 20 via a return line 104 between the hydrogen loop 102 and the hydrogen tank 20. The return line 104 includes a control valve CV2, a compressor C1 and a heat exchanger HX1. To recharge the pressure in the hydrogen tank, after start-up, the control valve CV2 in the return line is opened and the compressor C1 pressurises the recirculated hydrogen, which, by passage through the fuel cell in the start-up phase, has lost pressure, to the desired pressure for storage in the tank. The hydrogen from the recirculation loop, and after pressurisation by the compressor C1, is also at a higher temperature than required for storage in the tank 20. Therefore, the temperature is reduced, in the return line 104, by means of the heat exchanger HX1, in a heat exchange process with fresh hydrogen A from the main hydrogen tank (not shown here).

The re-pressurisation of the air tank 40 is performed utilising air from the main air line 105 (which receives air for the normal fuel cell operation from e.g. bleed or RAM air, or from a compressor). This main air line 105 is connected to the fuel cell inlet 14, and is also connected to the start-up air tank 40 via an air return line 106 which includes a control valve CV5, a compressor C2 and a heat exchanger HX2. To re-pressurise the start-up air tank 40, the control valve CV5 in the air tank return line 106 is opened to allow flow of air from the main air line 105. The air is compressed by the compressor C2 in the return line and, like for the hydrogen, is cooled by the heat exchanger HX2, to the appropriate temperature for storage in the air tank 40. The heat transfer fluid for cooling the air in heat exchange HX2 may be the fresh hydrogen that was used to cool the return hydrogen, after it has passed through the return hydrogen heat exchanger HX1.

This fresh hydrogen from the main hydrogen tank is then used for normal fuel cell operation. The cold fresh hydrogen from the tank has been warmed by heat transfer with the return hydrogen at heat exchanger HX1 and the return air at heat exchanger HX2 and then then be fed, in the hydrogen loop 102, to the mixer 60 (which is now operating stably after start-up) where it is mixed with residual hydrogen from the fuel cell, this being provided to the mixer 60 via the blower 50.

The flow of fresh hydrogen from the main tank should be controlled so that the temperature of pressurised hydrogen and air from the respective return line heat exchangers is close to ambient, the fresh (liquid) hydrogen fully evaporates and the temperature after the mixer is above 0° (preferably between 5°C and 95°C) for safe use in the fuel cell 10.

The compressors C1 and C2 and the blower, in the re-pressurising and the normal fuel cell operations are powered by the fuel cell 10.

In addition, the pressure in the start-up hydrogen tank 20 can be restored using excess hydrogen from the main tank. Due to extremely cold conditions inside the main hydrogen tank, part of the hydrogen in the tank will evaporate, raising the tank pressure, and may have to be released. Typically, a release valve is provided on the main tank. The present architecture may make use of the energy in this released pressure in the gaseous hydrogen B by connecting the relief valve to the start-up hydrogen tank to restore its high pressure after a start-up operation. The architecture may also be used in reverse, where the pressurised hydrogen is fed back to the main tank for pressure stabilisation purposes or for purging.

Although in the example in Fig. 1 the lines to the start-up tanks are shown as separate lines, it is also feasible that these could use a single line using bypasses around the heat exchangers and compressors.

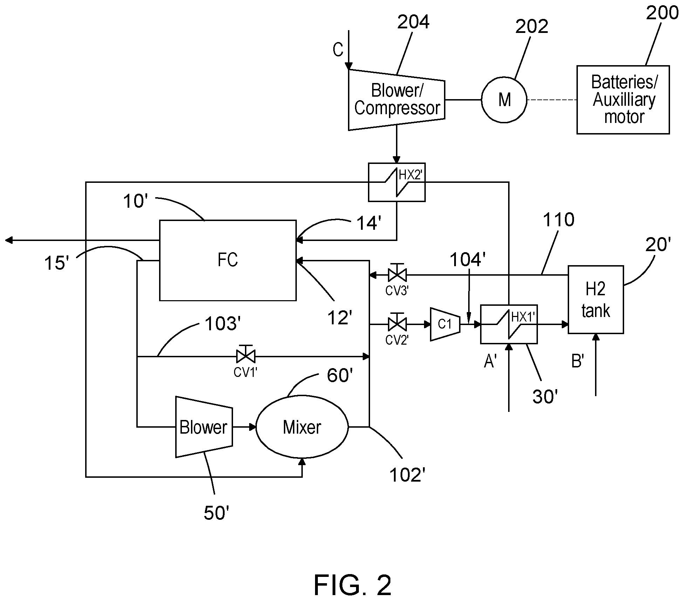

The example shown in Fig. 1 and described above is one way of implementing the start-up as provided herein, by using energy from high pressure air and hydrogen storage tanks for the start-up procedure. It is, however, feasible that the energy for the start-up may be provided from other stored energy sources. One example of an alternative implementation is shown in Fig. 2. Here, the start-up hydrogen supply and re-pressurisation of the start-up hydrogen tank is as for the example of Fig. 1 and the same parts are identified with the same reference numerals augmented with a '. The high pressure start-up air, however, is provided to the fuel cell 10' using stored energy from batteries 200 to drive a motor 202 to operate a blower/compressor 204, instead of using a high pressure start-up air tank. Air is drawn from ambient C by the blower/compressor 204 when it is driven by the motor 202 operated by energy from a set of batteries 200. The start-up air is compressed and provided to the air inlet 14' via a heat exchanger HX2'. Start-up operation is otherwise as for the Fig. 1 example.

Once the fuel cell 10' is operating stably and generating electricity for the blower 50' and mixer 60 and other loads e.g. engines, the batteries 200 can be turned off and the motor 202 (and hence the blower/compressor 204) can be driven by the electricity from the fuel cell 10'. The air from the blower/compressor 204 will need to be cooled for proper operation of the fuel call 10'. The warm blower air is therefore cooled at a heat exchanger HX2' using the hydrogen passing through the hydrogen heat exchanger HX1' as transfer fluid.

The pressure in the start-up hydrogen tank 20' can be restored in the same way as described for Fig. 1. For the start-up air flow, the batteries can be recharged using electricity from the fuel cell 10'. In an alternative example, the batteries 200 can be replaced by some other source of electricity, e.g. a mains connection or an auxiliary motor e.g. a turbine powered by compressed air from e.g. an airport.

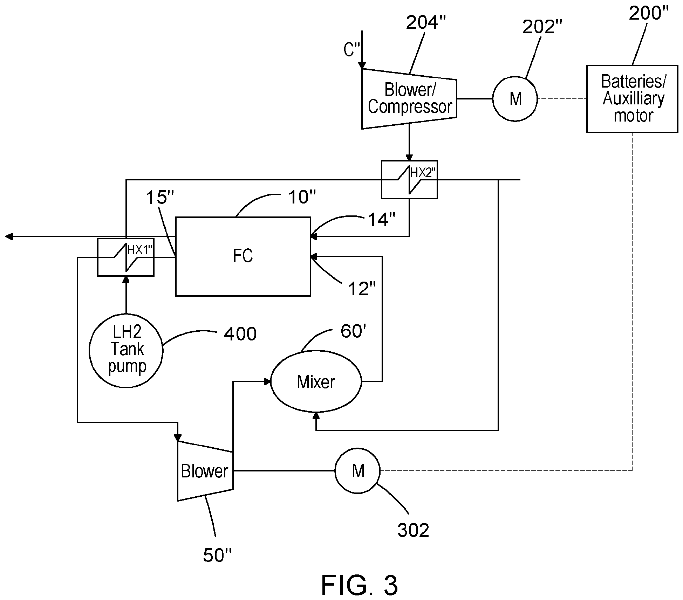

Instead of the air and hydrogen tank example of Fig. 1 or the hybrid example of Fig. 2, the start-up architecture of this disclosure may have both the air flow and the hydrogen flow in the start-up phase provided by batteries/auxiliary motors. I.e. both the hydrogen start-up flow and the air start-up flow may be provided in a manner similar to the air flow of Fig. 2. An example is shown in Fig. 3.

Again, parts of Fig. 3 that correspond to those of Fig. 1 or Fig. 2 will use the same reference number followed by a ".

In this example, a set of batteries 200" is used to drive a motor 202" to operate a blower/compressor 204" to drive ambient air C" to the fuel cell air input 14" via a heat exchanger HX2" as described for Fig. 2. For the hydrogen flow, a set of batteries (which may be the same set 200" as shown in Fig. 3 or a separate battery set) drives a motor 302 which drives a blower 50" to drive hydrogen from the fuel cell output 15". When powered by the battery during start up, the blower 50" is not being powered by the fuel cell. The unused hydrogen exiting the fuel cell 10" is drawn by the battery powered blower 50" via the mixer 60" (which is not operative as it is not yet powered by the fuel cell) and is provided to the hydrogen input 12". Once the fuel cell 10" is operative and generates electricity, the batteries can be switched off and electricity from the fuel cell drives the blowers and the mixer. In this example, the fresh hydrogen is pumped, by a pump that may be powered by batteries or some auxiliary motor or power source, from the main hydrogen tank 400, and is evaporated using hot hydrogen exiting the fuel cell 10" at output 15" in the hydrogen heat exchanger HX1". The warmed fresh hydrogen leaving that heat exchanger HX1" is used as the transfer fluid for the air from the start-up air blower 204" heat exchanger HX2". Depending on the hydrogen temperature and operating conditions, additional heat exchangers may be needed to sufficiently warm the liquid hydrogen for use in the fuel cell 10" operation. The heat exchange fluid in such additional heat exchangers may come from oil in the blowers and motors as well as from the coolant used for the fuel cell.

The heat exchangers used in any examples may be any known type of heat exchanger e.g. for liquid, gas or two-phase flow. The fluids flowing through the heat exchangers may be controlled according to the desired system operating point, depending on operating conditions, using control and/or bypass valves. Additional components for e.g. removing moisture, e.g. condensers, water separators, re-heaters etc. may also be used to protect against possible freezing issues.

As is known with fuel cells, a coolant loop will typically also be provided, but this is well-known and has not been described or shown further here, since the present disclosure focuses on the novel start-up architecture aspects of the fuel cell arrangement.

By using stored energy sources to drive air and hydrogen to the fuel cell in the start-up phase and then enabling those sources to be restored during normal operation of the fuel cell, this disclosure provides an efficient, simple, and reliable architecture to ensure rapid and smooth start-up of a fuel cell assembly.

## Claims

1. A start-up architecture for a fuel cell comprising:
a fuel cell (10) having a hydrogen input (12) and an oxygen source input (14) and a hydrogen output (15) for outputting residual hydrogen not used in the fuel cell reaction, the hydrogen output connected to the hydrogen input via a mixer (60) in a hydrogen loop (102);
a bypass loop (103), bypassing the mixer, between the hydrogen output and the hydrogen input;
a control valve (CV1) in the bypass loop between the hydrogen output and the hydrogen input;
a hydrogen start-up stored energy source (20, 20', 200") connected to the hydrogen input via a hydrogen start-up line; and
an oxygen source start-up stored energy source (40, 200, 200") connected to the oxygen source input via an oxygen source start-up line, wherein, during a fuel cell start up process, the architecture is configured to provide hydrogen to the hydrogen input from the hydrogen start-up stored energy source, via the hydrogen start-up line, and to provide a source of oxygen to the oxygen source input from the oxygen source start-up stored energy source via the oxygen source start-up line, and wherein when start-up is completed, the oxygen source start-up line and the hydrogen start-up line are configured to close.

2. The architecture of claim 1, further comprising a re-charge circuit for recharging the oxygen source start-up stored energy source and the hydrogen start-up stored energy source when start-up is completed.

3. The architecture of claim 1 or 2, wherein the hydrogen start-up stored energy source is a tank of pressurised hydrogen.

4. The architecture of any preceding claim, wherein the oxygen source start-up stored energy source is a tank of pressurised oxygen source.

5. The architecture of any of claims 1 to 3, wherein the oxygen source start-up stored energy source is one or more batteries.

6. The architecture of claim 1 or 2, wherein the oxygen source start-up stored energy source and the hydrogen start-up stored energy source are one or more batteries.

7. The architecture of any of claims 1 to 4, further comprising an oxygen source start-up control valve in the oxygen source start-up control line and a hydrogen start-up control valve in the hydrogen start-up control line.

8. The architecture of claim 5, wherein the oxygen source start-up line further comprises a motor and a blower and compressor between the one or more batteries and the oxygen source input and a heat exchanger to exchange heat between the oxygen source and hydrogen from a fresh hydrogen source.

9. The architecture of claim 6, wherein the hydrogen start-up line further comprises a motor and a blower and compressor between the one or more batteries and the hydrogen input, and a heat exchanger to exchange heat between residual hydrogen from the fuel cell hydrogen output and hydrogen from a fresh hydrogen source.

10. The architecture of claim 3 or 4 when dependent on claim 2, wherein the re-charge circuit comprises a hydrogen recharge line (104) between the hydrogen loop (102) and the tank of pressurised hydrogen.

11. The architecture of claim 10, wherein the hydrogen recharge line includes a hydrogen recharge line control valve (CV2), a compressor and a heat exchanger (30).

12. The architecture of claim 3 or 4 when dependent on claim 2, or claim 10 or 11, wherein the re-charge circuit comprises an oxygen source recharge line (106) between the air input and the tank of pressurised oxygen source.

13. The architecture of claim 12, wherein the oxygen source recharge line (106) includes an oxygen source recharge line control valve (CV5), a compressor and a heat exchanger (HX2).

14. The architecture of claim 6, wherein the one or more batteries are common to the oxygen source start-up stored energy source and the hydrogen start-up stored energy source.

15. A fuel cell system including a start-up architecture as claimed in any preceding claim, a main hydrogen source to provide hydrogen to the hydrogen input when the hydrogen start-up line is closed and a main oxygen source to provide oxygen to the oxygen source input when the oxygen source input is closed.
